# EUROPEAN PATENT APPLICATION

(11) **EP 4 775 331 A1**
(43) Date of publication of application: **15.07.2026**
(21) Application number: 26150038.3
(22) Date of filing: 02.01.2026
(51) Int. Cl.: B22F 10/28, B22F 10/80, B22F 12/90, B33Y 50/00, G05B 19/18, G05B 19/4099, B22F 10/66, B33Y 40/20, G01B 11/25, B23K 9/04, B23K 26/342, B22F 10/25, B22F 12/88, B22F 12/82

(54) **METHOD FOR PRODUCING A METALLIC OBJECT**

(30) Priority: 09.01.2025 IT 202500000198
(71) Applicant: Paronetto, Giuseppe, 31044 Montebelluna (IT)
(72) Inventor: Paronetto, Giuseppe, 31044 Montebelluna (IT)
(74) Representative: Citron, Massimiliano

(57) **Abstract**

A method for producing a metal object by 3D-printing and subsequent precision machining is described. The method comprises the step of attaching interconnection members to the external surface of a 3D-printed metal object, wherein the interconnection members applied to the object are capable of cooperating with corresponding interconnection members provided on a processing plane of a CNC machine, so as to be able to position the object on the processing plane in a controlled manner with respect to a positional reference system of the CNC machine.

## Description

The present invention relates to a method for producing a metal object by 3D-printing, in particular a method for producing a thin or flat object, e.g. such as a metal mold shell for hot molding.

The invention is particularly useful in the field of hot molding of carbon objects where thin shells are used, and we will refer to it as an example.

It is known to build carbon molds by means of an autoclave to use them as dies for molding carbon composite objects. Another well-known technology involves the use of metal molds, which also has the advantage of exploiting induction heating, which has high thermal performance. Metal molds are produced by milling a block of metal, but this leads to structural defects such as intrinsic fragility or weakening micro-areas. However, to mass-mold carbon objects, the mold must undergo intense and repeated thermal cycles. Especially for large molds and/or three-dimensional mold geometries, the cost and time required to produce the shell by removal from a solid block is too high (and for large objects, it's not even possible to find a block large enough to be machined).

Another technology developed by the Applicant involves 3D-printing a metal molding shell. Since the printed shell has an external surface that's too rough and irregular to form a high-quality mold cavity, the shell is machined on a CNC machine to ultimately create a smooth and dimensionally accurate mold cavity.

A problem with this process is positioning the printed object in the CNC machine with the required positional accuracy. A CNC machine processes a work-piece according to a machining program that requires precise 3D coordinates for the control of the tools, but a large work-piece, such as a mold shell, undergoes uncontrolled deformation during 3D-printing. The unknown final shape and poor surface quality of the 3D printed object prevent the 3D printed object's volume from accurately interfacing with the CNC machine's positional reference system.

The main object of the invention is to eliminate or mitigate the above-mentioned drawbacks.

A method is then proposed to produce a metal object through 3D-printing and subsequent precision machining,
with the step of attaching interconnection members to the external surface of a 3D printed metal object, wherein
the interconnection members applied on the object are able to cooperate with corresponding interconnection members provided on a processing plane of a CNC machine,
so that the object can be positioned on the processing plane in a controlled manner with respect to a positional reference system of the CNC machine,
namely, respecting a positional reference system of the CNC machine,
namely, adapting the 3D printed object to the positional reference system of the CNC machine, namely
the interconnection members are applied to the object so that the relative distance between each pair of such interconnection members corresponds to the relative distance between a corresponding pair of interconnection members provided on the CNC machine. Thus, the interconnection members on the object align with those on the CNC machine, can match, and connect to each other.

Thanks to this method, it is possible to interface the 3D printed object with the CNC machine with positional precision.

In one embodiment of the method, the interconnection members are applied on the object so that they are all substantially coplanar, to facilitate their coupling with a processing plane provided in the CNC machine.

In one embodiment of the method, the 3D-printed object is positioned in the CNC machine by detecting reference points on the object with a probe and manually attaching interconnection members on the object for the fixing of the object to the CNC machine's processing plane. The result, however, can be imprecise and is certainly labor-intensive.

If the object has very complex and convoluted shapes this method is often not feasible.

Effective application of the interconnection members requires precise knowledge of the final three-dimensional shape of the 3D printed object. To this end, one embodiment of the method comprises the following steps:
electronically performing an optical scan of the final 3D printed object to detect 3D coordinates of its external surface;
bringing interconnection members closer to the external surface until reaching 3D target coordinates calculated by processing the detected 3D coordinates; and
fixing one or more interconnection members on the external surface in correspondence of the 3D target coordinates.

In one embodiment of the method, there is the step of applying the object equipped with the interconnection members to a CNC machine (e.g. on a processing plane of the CNC machine) and fixing the object to the CNC machine by coupling the interconnection members provided on the object to corresponding and/or compatible interconnection members of the CNC machine that are positioned according to a reference system of the CNC machine.

In one embodiment of the method, the interconnection members of the CNC machine are a matrix or lattice of holes, pins or points or vices, especially coplanar.

In one embodiment of the method, to avoid positional errors and give continuity to the machining process without moving the object too many times,
the metal object is printed via 3D-printing in a 3D-printing machine and
said scan is performed while the object is still in the 3D-printing machine.

In one embodiment of the method, the metal object is printed via 3D-printing in a 3D-printing machine and said scanning is performed after it has been removed from the 3D-printing machine, e.g. in a dedicated scanning machine or in the CNC machine.

In one embodiment of the method, the optical scanning detects 3D coordinates relative to a reference system of the 3D-printing machine.

In one embodiment of the method, it has the steps of
detecting, through the optical scanning, 3D coordinates of said external surface with respect to a reference system of the 3D-printing machine, and
calculating, e.g. via software, said 3D target coordinates by processing the detected 3D coordinates.

In a more precise and better automatable embodiment of the method, the interconnection members are fixed on said external surface by means of a fixing means (e.g. a welding head or an adhesive dispenser) mounted on a robotic arm,
and the robotic arm is controlled to move the fixing means in space until it reaches the interconnection members to be fixed.

In a more precise and more automatable embodiment of the method, the interconnection members are brought closer to said external surface by a robotic arm that picks up an interconnection member and brings it to a point in space, in proximity of said external surface, corresponding to 3D target coordinates.

In one embodiment of the method, the interconnection members are fixed to said external surface by welding and/or gluing.

In one embodiment of the method, the interconnection members are brought closer to said external surface until a residual empty space is left between each interconnection member and said external surface, and
the residual empty space is filled with a fixing member, e.g. adhesive and/or molten welding material.

In one embodiment of the method, the interconnection members of the CNC machine may be stationary or movable with respect to the reference system of the CNC machine and/or with respect to the processing plane.

In one embodiment of the method, after the coupling of the interconnection members to the 3D printed object, metal is removed from the object by a tool of the CNC machine to produce a smooth surface, e.g. a mold cavity, on the object.

In one embodiment of the method, after the coupling of the interconnection members to the 3D-printed object, by a tool of the CNC machine metal is removed from the object mounted in the CNC machine to produce a final object of a different shape. Specifically, the metal removal creates a smooth surface, such as a mold cavity, on the object.

In one embodiment of the method, the metal-removing tool is controlled via software to obtain a predefined surface profile on the object through metal removal. Specifically, said software operates to replicate and physically create a first digital three-dimensional profile on the object, an in particular such first digital three-dimensional profile is equal to, or scaled with respect to, a second digital three-dimensional profile that was used as a reference during the 3D-printing to 3D print the object currently being processed on the CNC machine.

In one embodiment of the method, the optical scanning of the final 3D printed object determines 3D coordinates of its external surface;
said 3D coordinates of the external surface are composed to form a third digital three-dimensional profile, and
the first three-dimensional profile is compared, e.g. via software, three-dimensionally with the third three-dimensional profile to verify whether the volume relating to the first three-dimensional profile is completely contained within the volume relating to the third three-dimensional profile.

This control ensures that the metal removal from the 3D printed object allows obtaining the entire object as initially designed.

In one embodiment of the method, in the aforementioned step of bringing closer, a robotic arm picks up an interconnection member and brings it to a point in space near the object corresponding to 3D target coordinates.

In one embodiment of the method, before said step of fixing, a robotic arm picks up the object from the 3D-printing machine and places it on or in the CNC machine, in particular on a processing plane of the CNC machine, matching and/or aligning interconnection members provided on the object with respective corresponding interconnection members provided on the machining table.

In one embodiment of the method, the interconnection members mounted on the object are fixed to respective holes provided on the processing plane of the CNC machine.

In one embodiment of the method, each said step of detecting, calculating or managing three-dimensional coordinates takes place via software.

In one embodiment of the method, the printed object is a shell.

In one embodiment of the method, the object or shell is 3D printed in the 3D-printing machine using additive deposition technology, so as to build the object or shell progressively in layers of metal through growth by depositing a quantity of metal on a previously printed portion.

Additive deposition technology involves depositing successive layers of metal, and by growing them, the desired object is finally created. The deposited metal achieves a high quality, close to that of a foundry.

For example WAAM *(wire arc additive manufacturing)* or DED (*directed energy deposition*) is used as an additive deposition technology where a laser melts the metal and the object is built drop by drop.

Preferably, during the 3D-printing, successive, overlapping layers of molten metal are deposited. Specifically, successive, overlapping layers of molten metal are deposited by adjacent drops of molten metal.

Preferably, the metal is deposited in a hermetically sealed environment and, during deposition, ambient air is extracted from the hermetically sealed environment.

By carrying out the deposition in a vacuum environment or at reduced atmospheric pressure, not only it is possible to eliminate or at least limit the number of inclusions/blowholes in the metal, but also, above all, to avoid the oxidation of the deposited layers.

Preferably, the method produces two mold shells composable to obtain a complete mold cavity.

Once the two shells are obtained, the following steps are carried out to hot mold an object:
- enclosing within the cavity formed by the juxtaposition of the two shells a solid core completely wrapped in an external layer, e.g. in a floppy carbon lamination;
- placing the two shells thus filled and attached to each other inside a closed chamber of a press,
- pressing the shells against each other,
- heating the core and the outer layer, e.g. to 130-140 degrees, for
   making the core expand towards the cavity and
   solidify (curing) the outer layer and fix it to the core,
- separating the shells, and extracting the molded composite object.

A composite object is defined here as an object consisting of a solid inner core and an outer layer that covers the entire core. The outer layer is preferably carbon or a carbon lamination, e.g. impregnated by resin or pre-preg.

Specifically, said core is a solid object obtained by hot molding - and consisting only of - powdered material or in the form of microspheres or particles. Specifically, the powdered material comprises - or consists of - expanded and non-expanded particles, the particles being plastic, closed, hollow, and filled with gas.

Gas-filled plastic microspheres may be used as particles for molding the core. Specifically, the powdered material to be molded is preferably composed of 10-70% expanded microspheres and 90-30% unexpanded microspheres by weight. The microspheres are made of plastic, closed, hollow, and filled with gas. These values ensure favorable performance and weight, suitable for the application, particularly good impact absorption and lightness.

Expanded microspheres are essential, and act as a binder or filler for the other unexpanded particles. In fact, expanded microspheres are the filler that acts as a binder to prevent the other, heavier, expandable microspheres (not yet expanded) from sinking to the bottom of the mold due to gravity and densifying. Instead, the expanded microspheres keep the expanding microspheres uniformly suspended throughout the material. This is why the presence of expanded and unexpanded microspheres ensures uniform density throughout the core, ensuring uniform mechanical performance.

Microspheres are generally spherical in shape and very small (10 to 40 µm in diameter). However, their size is not essential.

Further advantages will become apparent from the following description of preferred method, where:

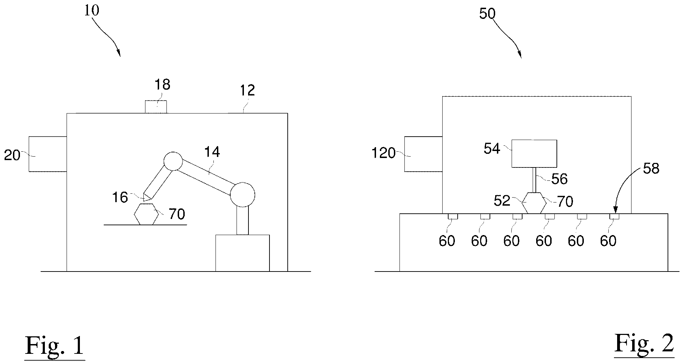

- Figure 1 shows a front view of a 3D-printing machine,
- Figure 1 shows a front view of a CNC machine,
- Figure 3 shows a sequence of steps for production of a metal object,
- Figure 4 shows three-dimensional profiles of a metal object.

To produce a metal object 70 the process begins in a machine 10 (fig. 1) which comprises:
- a chamber 12, preferably hermetically sealable;
- a robotic arm 14 installed inside the chamber 12; and
- a deposition head 16 mounted on the robotic arm 14.

Preferably, the machine 10 comprises an electronic controller 20 configured to control, and preferably coordinate, the movements of the robotic arm 14 and the activity of the deposition head 16. However, it is possible to use a different management system.

The deposition head 16 preferably works with WAAM or DED technology, but any metal 3D-printing technology can be used.

By moving the deposition head 16 in space according to a tracing program, metal is deposited and the object 70 is built up in layers.

Preferably, the machine 10 comprises means 18 for creating a vacuum, or at least an atmospheric depression, e.g. of at least 0.3-0.99 bar, inside the chamber 12, e.g. a vacuum pump. In particular, the means 18 are controlled by the electronic controller 20.

The CNC machine 50 of Fig. 2 is a known CNC machining center, capable of performing surface machining on a work-piece 52 positioned on a processing plane 58 provided on its surface with interconnection members 60 for the work-piece. The interconnection members 60 are, for example, a matrix of holes, each preferably equipped with a fixing pin.

The surface machining of the work-piece 52 takes place, for example, via one or more known spindles 54 equipped with a tool 56.

Preferably the machine 50 comprises an electronic controller 120 configured to control, and preferably coordinate, the activity and movements of the interconnection members 60, the one or more spindles 54 and each tool 56. However, it is possible to use a different management system.

### METHOD

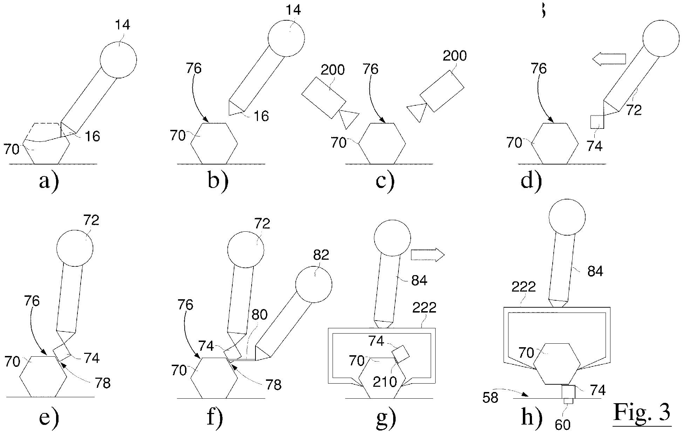

To produce an object, for example a metallic molding shell 70, the shell 70 is 3D-printed using the machine 10. The shell 70 is created progressively (fig. 3a) by depositing layers of metal one on top of the other thanks to successive passes of the head 16 moved by the robotic arm 14.

Once the shell 70 has been printed (fig. 3b), the shell 70 is prepared for subsequent processing in the machine 50.

While still in the machine 10, the shell 70 is optically scanned by image scanning means 200 (Fig. 3c) to obtain a digital profile of the shell 70. From the profile, three-dimensional spatial coordinates of the outer surface 76 of the shell 70 are obtained with respect to a zero reference associated with the machine 10.

Thanks to the scan it is possible to know the real three-dimensional shape of the external surface 76, which during the deposition of the metal has changed, due to thermal deformations, with respect to the theoretical progressive construction profile according to which the head 16 was spatially driven.

A robotic arm 72 picks up an interconnection member 74 and brings it (fig. 3d) close to the external surface 76, preferably almost touching it so that an empty space 78 remains between the external surface 76 and the interconnection member 74 (fig. 3e).

While the interconnection member 74 is held in place by the robotic arm 72 (Fig. 3e), a robotic arm 82 equipped with a fixing means 80 brings the fixing means 80 close to the empty space 78 (Fig. 3f) or, in general, to the area of proximity or contact between the interconnection members 74 and a portion of the external surface 76. The fixing means 80 is then activated and the interconnection member 74 is stably attached to the external surface 76, e.g. via a welding zone 210. Each interconnection member 74 is placed in the space around the external surface 76 with respect to the other interconnection members 74 so that all the interconnection members 74 are arranged with the same positional pattern as the interconnection members 60. This ensures the alignment of each interconnection member 74 with a corresponding interconnection member 60.

Then the shell 70 is picked up from the machine 10 (Fig. 3g) and brought into the machine 50 by a robotic arm 84 equipped with gripping means 222, e.g. suction cups or clamps. The robotic arm 84 manipulates the shell 70 so that the interconnection member 74 engages with, and remains fixed to, a corresponding interconnection member 60 on the processing plane 58 (Fig. 3h).

Then the shell 70 is surface-machined by the CNC machine 50, e.g. to obtain a smooth and dimensionally accurate molding cavity.

Realistically, it is necessary for an object 70 to be equipped with a plurality of interconnection members 74, not just one. Therefore, what is described for the single interconnection member 74 in Fig. 3 also applies to all other necessary interconnection members 74.

Preferably, the controller 20 controls the various robotic arms of the machine 10 and acquires and processes via software the data detected by the image scanning means 200.

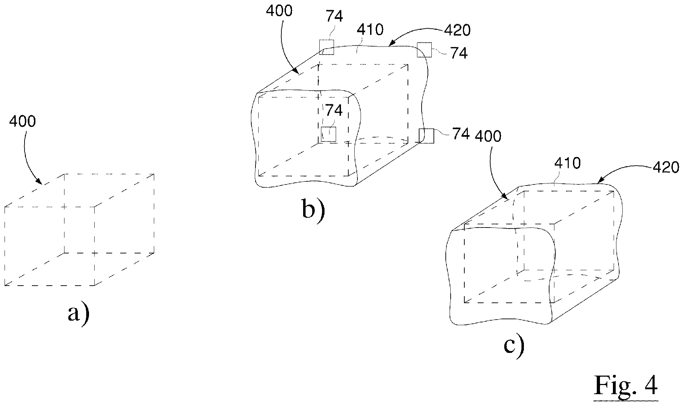

By way of example, Fig. 4 schematically shows some processing steps that occur during the process illustrated in Fig. 3. These steps may preferably be implemented via software, e.g. all or part of them in the electronic controller 20 or in a remote design station (not shown).

Fig. 4a shows a three-dimensional digital profile 400 (here called *ideal* or *reference* profile), in the illustrated example a cube, as it would be displayed, for example, on a PC monitor. The profile 400, which represents the object as 3D-printed through an ideal, defect-free 3D-printing process, corresponds to a set of 3D spatial coordinates that the tracing program calculates and/or processes to sequentially guide the deposition head 16 and/or the robotic arm 14 during the 3D-printing of the object 70. At the end of the 3D-printing (Fig. 4b), a metal volume 410 is obtained that is different from the profile 400. In the ideal case, the volume 410 completely contains the volume of the profile 400.

The optical scan in Fig. 3c detects the external surface, and related 3D coordinates, of the volume 410, to form another three-dimensional profile 420, here called *scan* profile.

The interconnection members 74 are applied to the volume 410.

In order for the machining in the CNC machine 50, which can only remove metal from the volume 410, to perfectly obtain the ideal three-dimensional profile 400, corresponding to the desired object, the three-dimensional scan profile 420 must completely contain the ideal three-dimensional profile 400. This check may be performed, for example, via a CAD software.

The volume 410 is mounted on the CNC machine 50 by connecting the interconnection members 74 to those of the CNC machine 50. The volume 410 is now ready for machining.

Since each interconnection member 74 has a known position with respect to the volume 410, and each interconnection member 74 has a known position with respect to its corresponding interconnection member 60, and each interconnection member 60 has a known position in the reference system of the CNC machine 50, it follows that each point of the volume 410 also has a known position in the reference system of the CNC machine 50. It is then possible to remove metal from the volume 410 to obtain an object 70 corresponding to the ideal three-dimensional profile 400.

Note that, statistically, the ideal three-dimensional profile 400 can be obtained by sculpting the volume 410 with even different machining programs. In fact, if the volume 410 has dimensions that allow it, that is, if it is sufficiently larger than the ideal three-dimensional profile 400, the ideal three-dimensional profile 400 can be "placed" inside the volume 410 in various positions as long as it does not protrude from it. Fig. 4c shows, for example, the ideal three-dimensional profile 400 moved inside the volume 410 with respect to Fig. 4b. In both cases, the object outlined by the ideal three-dimensional profile 400 would be correctly obtained.

In some applications, of lesser value and/or without many dimensional constraints, it is also possible to accept that the volume 410 is not able to contain the ideal three-dimensional profile 400, so that the final piece obtained in the CNC machine 50 is not the perfect copy of the ideal three-dimensional profile 400.

## Claims

1. Method for producing a metal object by 3D-printing and subsequent precision machining, with the step of
attaching interconnection members to the external surface of a 3D-printed metal object, wherein
the interconnection members applied to the object are capable of cooperating with corresponding interconnection members provided on a processing plane of a CNC machine,
so as to be able to position the object on the processing plane in a controlled manner with respect to a positional reference system of the CNC machine.

2. Method according to claim 1, wherein the 3D-printed object is positioned in the CNC machine by detecting reference points of the object with a probe and manually applying interconnection members to the object for fixing the object on the processing plane of the CNC machine.

3. Method according to claim 1 or 2, comprising the steps of:
• electronically performing an optical scan of the final 3D printed object to detect 3D coordinates of its external surface;
• bringing interconnection members closer to the external surface until reaching 3D target coordinates calculated by processing the detected 3D coordinates; and
• fixing one or more interconnection members on the external surface in correspondence with 3D target coordinates;
• bringing the object thus equipped with the interconnection members to a processing plane of a CNC machine and fixing it there by coupling the interconnection members provided on the object to corresponding and/or compatible interconnection members of the CNC machine.

4. Method according to claim 3, wherein
the metal object is printed by 3D-printing in a 3D-printing machine and
said scan is performed while the object is still in the 3D-printing machine.

5. Method according to claim 3 or 4, with the steps of
detecting, by optical scanning, 3D coordinates of said external surface with respect to a reference system of the 3D-printing machine, and
calculating said 3D target coordinates by processing, e.g. via software, the detected 3D coordinates.

6. Method according to any preceding claim from 3 to 5, wherein the interconnection members are fixed on said external surface by means of a fixing means mounted on a robotic arm,
and the robotic arm is controlled to move the fixing means in space until it reaches the interconnection members to be fixed.

7. Method according to any preceding claim from 3 to 6, wherein the interconnection members are brought close to the external surface by means of a robotic arm that picks up an interconnection member and brings it to a point in space, in the vicinity of said external surface, corresponding to said 3D target coordinates.

8. Method according to any preceding claim, wherein a robotic arm picks up the object from the 3D-printing machine and places it on a processing plane of the CNC machine by matching and/or aligning interconnection members present on the object with respective corresponding interconnection members provided on the processing plane.

9. Method according to any preceding claim, wherein
the 3D-printing of the object occurs following a digital reference three-dimensional profile,
the optical scanning determines 3D coordinates of the external surface of the object,
said 3D coordinates of the external surface are processed to form a digital three-dimensional scanning profile,
the three-dimensional digital scanning profile is compared three-dimensionally via software with the digital reference three-dimensional profile to verify whether the volume relating to the reference digital three-dimensional profile is completely contained in the volume relating to the digital three-dimensional scanning profile.

10. Method according to any preceding claim, wherein after the object has been positioned on the processing plane, the object is machined by a CNC machine tool to obtain a mold cavity on the object.
